Europäisches Patentamt

European Patent Office

Office européen des brevets

(11) Publication number: **0 279 428 B1**

# EUROPEAN PATENT SPECIFICATION

(45) Date of publication of patent specification: **29.12.93**  (51) Int. Cl.5: **H02P 5/28**, H02P 1/52

(21) Application number: **88102298.2**

(22) Date of filing: **17.02.88**

(54) **Electric motor control system.**

(30) Priority: **17.02.87 JP 33619/87**

(43) Date of publication of application:
**24.08.88 Bulletin 88/34**

(45) Publication of the grant of the patent:
**29.12.93 Bulletin 93/52**

(84) Designated Contracting States:
**DE GB SE**

(56) References cited:
EP-A- 185 212
EP-A- 308 974
DE-A- 3 150 396
US-A- 4 427 934

PATENT ABSTRACTS OF JAPAN, vol. 9, no.
173 (E-329)(1896) 18 July 1985; & JP-A-60
046793 (TOSHIBA K.K.) 13.03.1985

PATENT ABSTRACTS OF JAPAN, vol. 6, no.
164 (E-127)(1042) 27 August 1982; & JP-A-
57083184 (FUJI DENKI SEIZO K.K.) 24.05.1982

PATENT ABSTRACTS OF JAPAN, vol. 10, no.
133 (E-404)(2190) 17 May 1986; & JP-A- 60
261395 (TOSHIBA K.K.) 24.12.1985

PATENT ABSTRACTS OF JAPAN, vol. 9, no.
154 (E-325)(1877) 28 June 1985; & JP-A- 60
032593 (FUJI DENKI K.K.) 19.02.1985

(73) Proprietor: **KABUSHIKI KAISHA TOSHIBA
72, Horikawa-cho
Saiwai-ku
Kawasaki-shi Kanagawa-ken 210(JP)**

(72) Inventor: **Kuroiwa, Akihiko 118, Kabushiki
Kaisha Toshiba
Shimizugoaka Ryo
2-16-1, Shimizugaoka
Fuchu-shi Tokyo-To(JP)**

(74) Representative: **Liesegang, Roland, Dr.-Ing. et
al
FORRESTER & BOEHMERT
Franz-Joseph-Strasse 38
D-80801 München (DE)**

## Description

## BACKGROUND OF THE INVENTION

### Field of the Art

This invention relates to a control system for an electric motor equipped with a speed or magnetic flux control means for performing feedback control of a speed or field flux of an electric motor in accordance with the speed reference or magnetic flux reference, respectively.

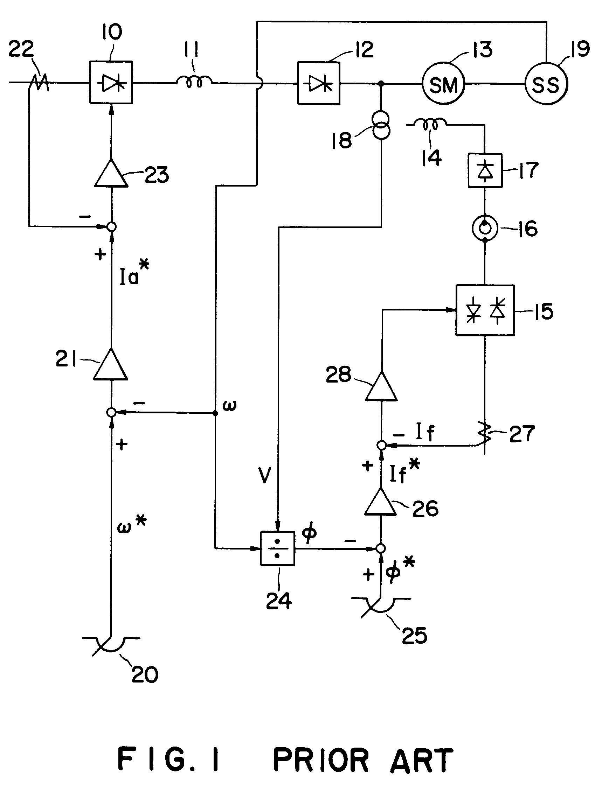

FIG. 1 is a circuit diagram of a conventional control system for an electric motor which is subjected to variable speed control. Referring to the control system of FIG. 1, an a.c. voltage with variable frequency and variable voltage is applied to a synchronous motor (SM) 13 through a rectifier 10, a d.c. reactor 11 and an inverter 12, and field current is also applied to a field winding 14 of the synchronous motor 13 through a frequency converter 15, an a.c. exciter 16 and a rotary rectifier 17, which constitute a brushless exciting mechanism. A voltage V and a speed $\omega$ of the synchronous motor 13 are detected by a voltage detector 18 and a speed detector (SS) 19 and the detected signals are introduced to a control circuit, respectively. An armature current reference $I_a^*$ is controlled by a speed control circuit 21 so as to make zero the deviation between a reference speed $\omega^*$ set by a speed determining means 20 and a speed feedback detected by the speed detector 19. An armature current $I_a$ of the synchronous motor 13 is detected by an current detector 22 on the a.c. side of the rectifier 10 and controlled so as to accord with the armature current reference $I_a^*$ by an armature current control circuit 23. The speed of the synchronous motor 13 is controlled in response to the armature current $I_a$.

The voltage V is utilized to obtain a feedback value of the field flux $\Phi$, $\Phi = f(V/\omega)$, by an operating element 24 in accordance with the speed $\omega$ detected by the speed detector 19. A magnetic flux reference $\Phi^*$ is set by a magnetic flux setter 25, and a field current reference $I_f^*$ is formed by a magnetic flux control circuit 26 in order to make zero the deviation between the magnetic flux reference $\Phi^*$ and the field flux $\Phi$. A field current $I_f$ is detected by a current detector 27 on the primary side of the frequency converter 15 and feedback controlled through a field current control circuit 28 and the frequency converter 15 so as to coincide with the field current reference $I_f^*$. According to the field current control manner described above, the magnetic flux of the synchronous motor 13 can be controlled.

The control system of the character described above and shown in FIG. 1 is operated on the premise that the control circuit of the system starts its operation from a time of the operation stoppage of the synchronous motor 13, and therefore, the control system provides the following problem in a case where the operation of the control circuit has to be started under the driving condition of the synchronous motor 13 in a case, for example, where instantaneous power supply stoppage occurs and then original operating condition is recovered.

The problem will be explained with reference to FIGS. 2 through 5, in which FIGS. 2 and 3 are explanatory of the behavior of the armature current control system at the recovery of the instantaneous power supply stoppage and FIGS. 4 and 5 are also explanatory of the behavior of the magnetic flux control system at the same time.

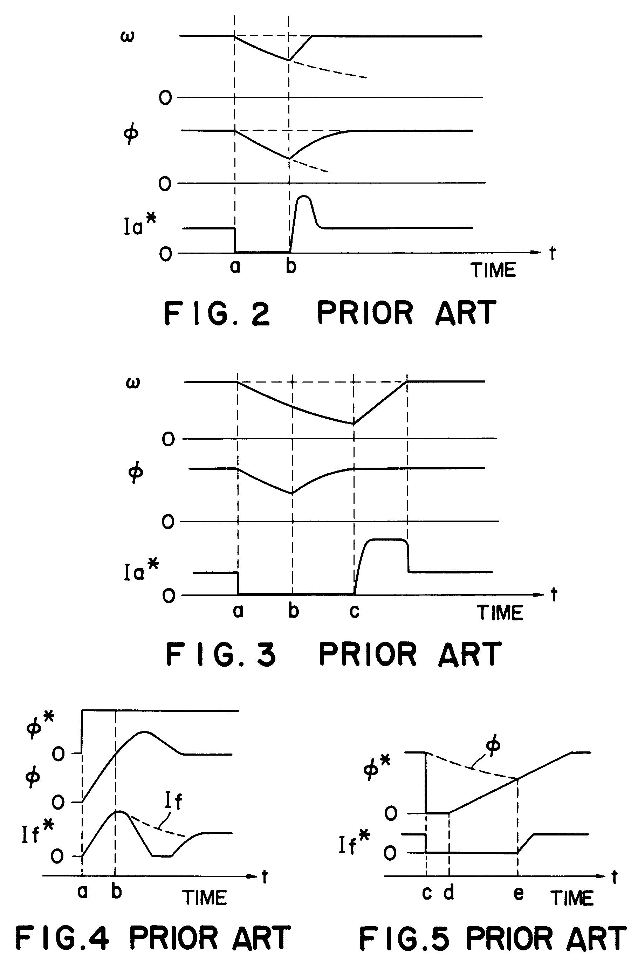

Referring to FIG. 2, supposing that the instantaneous power supply stoppage occurs at a time of point $\underline{a}$ in a time chart of FIG. 2 and the supply stoppage is recovered at a time of point $\underline{b}$ in the chart, the difference between an actual speed $\omega$ and the speed reference $\omega^*$ becomes large for the reason that the speed reference $\omega^*$ immediately becomes zero, whereas the speed $\omega$ is gradually reduced in accordance with the inertia of a rotating member and the load torque thereof. Accordingly, at the recovery time, point $\underline{b}$, of the power supply stoppage, an output of the speed control circuit 21, being the armature current reference $I_a^*$, rapidly increases. In the meantime, the field flux $\Phi$ decreases at the time $\underline{a}$ in response to the time constant of the electric motor, and in response to this decreasing, the commutative armature current $I_a$ of the inverter 12 also decreases, so that when an excessive armature current flows in a time interval of decreased magnetic flux as shown in FIG. 2, the inverter 12 may fail to commutate the current flow.

In order to obviate such defect, in a conventional technique, the speed control system is operated to start the speed control at a time of point $\underline{c}$ in FIG. 3 at which the magnetic flux $\Phi$ recovers to a value substantially equal to the magnetic flux just before the instantaneous power supply stoppage.

As described hereinabove, according to the conventional technique, a relatively long control loss time occurs between the instantaneous power supply stoppage time $\underline{b}$ and the actual operation start time $\underline{c}$ of the armature current controlling. This constitutes a significant problem.

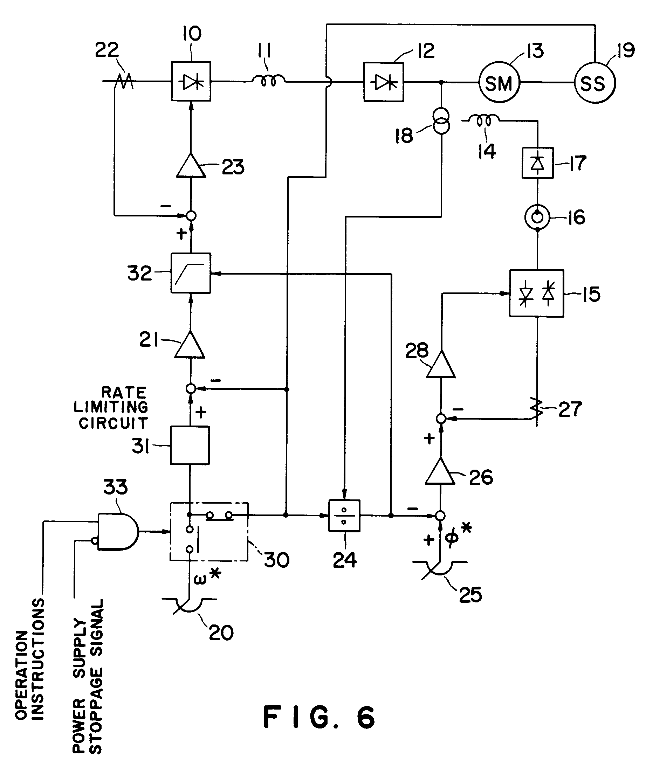

Referring to FIG. 4, when the field current reference $I_f^*$ starts to rise in response to the rising of the magnetic flux reference $\Phi^*$ at the time $\underline{a}$, the field flux $\Phi$ also rises following to the rising of the field current reference $I_f^*$. The magnetic flux $\Phi$ reaches the magnetic flux reference $\Phi^*$ at the time $\underline{b}$, but overshoot occurs in a control system in which proportional-integration control operation is carried out. The magnitude of this overshoot is based on the step-response in which the motor voltage stands up from zero value, so that the magnitude becomes considerably large and the voltage of the synchronous motor 13 may become excessive, thus being dangerous. Particularly, in a case where the brushless exciter is used, the field current $I_f$ passing the field winding 14 flows through the rotary rectifier 17 in a circulating mode in spite of the intention of the rapid throttling of the field current $I_f$, and finally, the field current control due to the primary voltage control of the a.c. exciter 16 may become impossible. This may result in further increasing of the excessive voltage of the synchronous motor 13.

In order to obviate the defects described above, there has been proposed a solution in which the magnetic flux reference $\Phi^*$ gradually increases at the operation starting time of the control circuit, but in this solution, a problem will occur in a case where the instantaneous power supply stoppage occurs.

In this connection, referring to FIG. 5, supposing that the instantaneous power supply stoppage occurs at the time c and the stoppage is recovered at the time d and that the field control stops at the time c and the field control again starts at the time d, the flux reference $\Phi^*$ gradually rises from zero value at the time d. In this time, the actual field flux $\Phi$ gradually decreases from the time c in accordance with the time constant of the motor, but the field flux $\Phi$ has not yet decreased to zero value at the time d. Accordingly, the output of the magnetic flux control circuit 22, being the field current reference $I_f^*$, is maintained to the lower limit value of zero. The field current reference $I_f^*$ takes a plus value at a time of point e in consideration of the fact that the flux reference $\Phi^*$ gradually increases and the actual field flux $\Phi$ gradually decreases, and then the flux control circuit 22 generates the output. As described above, in spite of the fact that the instantaneous power supply stoppage has been recovered at the time d, the actual field control starts from the time e, thus occurring the control loss for a long time between the times d and e. The occurrence of such a long control loss time is very inconvenient for apparatus driven with a variable speed such as used in a power plant or station which generally requires quick recovery to the steady operative condition after the occurrence of the instantaneous power supply stoppage.

The EP-A-185212 relates to a control system for a power converter driving a synchronous motor and comprising a load commutated thyristor. This document is concerned with problems due to the switching from the intermission commutation to the load commutation. The control system of the EP-A-185212 comprises a speed setting means for setting a speed target for the motor, a speed detecting means for detecting a driving speed of the motor, and a variation rate limiter that compares the speed target and the detected motor speed and outputs a speed reference that is varied to follow the speed target but within a limited rate.

The EP-A-308974 (prior art according to Article 54(3)EPC) relates to an induction motor control system for more accurately controlling the rotational speed of the inducting motor, comprising a speed setting device, a rate circuit for limiting an acceleration or deceleration rate and switches for switching to the detected speed side or the reference speed side and switching to the voltage phase difference side or the speed difference side, respectively. The switches are controlled so that the rotational speed of the induction motor can slowly reach a predetermined rotational speed at an acceleration or deceleration rate determined by the rate circuit.

## SUMMARY OF THE INVENTION

An object of this invention is to eliminate defects or drawbacks encountered with the prior art technique and to provide a control system for an electric motor capable of realizing a normal controlling condition of the system safely and quickly at a time of recovery of instantaneous power supply stoppage.

A further object of this invention is to provide a control system for a synchronous motor capable of achieving the rising of motor voltage for a short time without causing excessive voltage of the synchronous motor when the magnetic flux control system is charged from "OFF" state to "ON" state at a time of recovery of the instantaneous power supply stoppage to enable safe and effective operation of the control system.

In one aspect, these and other objects can be achieved according to this invention by providing a control system for an synchronous motor according to claim 1.

According to the control system of the character described above, the rate limiting means can be effective only in a case when a control circuit system is once made "OFF" with respect to the speed reference in the speed control mode and is not effective in the substantial meaning during the normal operation of the control system, and the armature current is limited in accordance with the value of the field flux. Accordingly, when the speed control means is changed over from the "OFF" state to the "ON" state, the rising of the speed can be achieved for a short time without causing the failure of the commutation of an inverter, thus enabling safe and effective operation of the motor.

In another aspect, aforementioned and other objects can be achieved according to this invention by providing a control system for a synchronous motor according to claim 5.

According to the control system of the character described directly above, the first-order lag filter is effective only in case of the rising of the voltage with respect to the flux reference of the flux control, i.e. voltage control, and is not effective in the substantial meaning during the normal operation of the control system. Accordingly, when the field control system is changed from the "OFF" state to the "ON" state, the rising of the voltage can be achieved for a short time without causing excessive voltage of the synchronous motor, thus enabling safe and effective operation of the control system.

The preferred embodiments of this invention will be further described in detail hereunder with reference to the accompanying drawings.

BRIEF DESCRIPTION OF THE DRAWINGS

In the accompanying drawings:

FIG. 1 is a block diagram representing a control system of conventional type of a synchronous motor;

FIGS. 2 and 3 are time charts explanatory of behavior of a speed control means at a time of recovery of instantaneous power supply stoppage of the control system shown in FIG. 1;

FIGS. 4 and 5 are also time charts explanatory of behavior of a magnetic flux control means at a time of recovery of instantaneous power supply stoppage of the control system shown in FIG. 1;

FIG. 6 is a block diagram representing the first embodiment of the control system according to this invention;

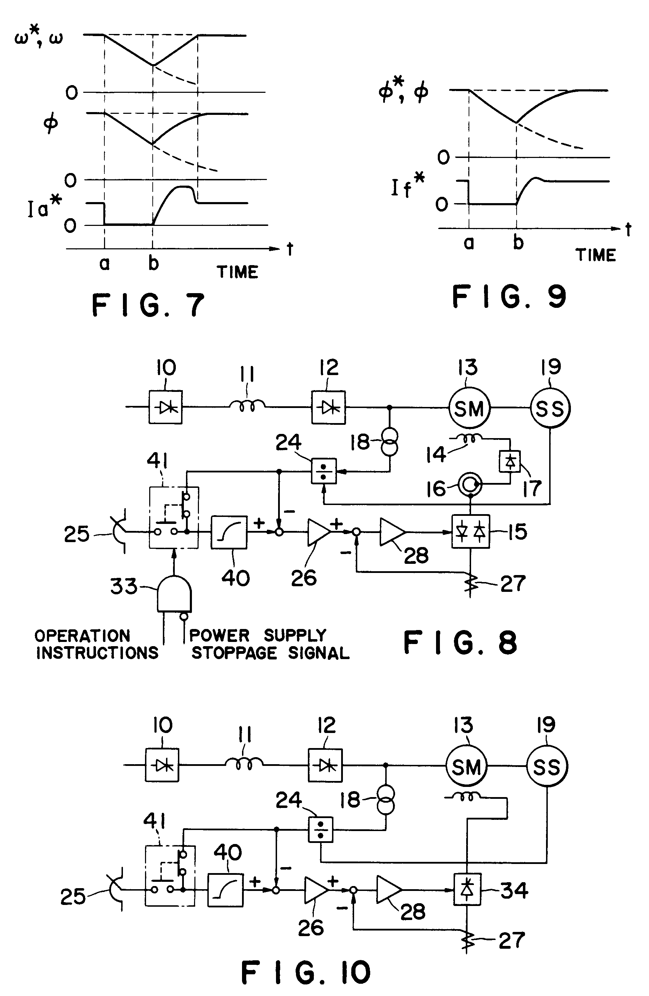

FIG. 7 is a time chart explanatory of the operation of the control system shown in FIG. 6 at a time of instantaneous power supply stoppage;

FIG. 8 is a block diagram of the second embodiment of the control system according to this invention;

FIG. 9 is a time chart explanatory of the operation of the control system shown in FIG. 8 at a time of instantaneous power supply stoppage; and

FIG. 10 is a block diagram representing one preferred modification of the control system shown in FIG. 8.

DESCRIPTION OF THE PREFERRED EMBODIMENTS

FIG. 6 is a circuit diagram representing a first embodiment in a case where this invention is applied to a speed control means, which comprises the circuit construction shown in FIG. 1 as a basic construction and further comprises, in association with the basic construction, a change-over circuit 30, a rate limiting circuit 31, a current limiting circuit 32, and an AND gate circuit 33.

The rate limiting circuit 31 is arranged on the speed reference input side of the speed control circuit 21. The change-over circuit 30 operatively connected to the rate limiting circuit 31 performs the change-over operation to transmit, as the speed reference into the speed control circuit 21 through the rate limiting circuit 31, the speed reference $\omega^*$ from the speed determining means 20 during the normal operation of the control system and the feedback value of the speed $\omega$ from the speed detector 19 during the stoppage of the control system. The change-over circuit 30 is enabled by the output "1" from the AND gate circuit 33. To the first input terminal of the AND gate 33 is inputted operation instructions from an external element, not shown, and to the second input terminal is inputted a signal representing no power supply stoppage as a signal reverse to a power supply stoppage signal. The current limiting circuit 32 serves to limit the armature current reference $I_a^*$ within a predetermined value range in response to the field flux $\Phi$.

The operation of the circuit means shown in FIG. 6 will be described hereunder with reference to FIG. 7 which shows a time chart in a case where the instantaneous power supply stoppage occurs at the time a and is recovered at the time b. Referring to FIG. 7, the speed $\omega$ of the synchronous motor 13 and the feedback value of the field flux $\Phi$ both gradually decrease at the time a, whereas the controlling function of the system does not serve during the instantaneous power supply stoppage, so that the speed reference $\omega^*$ maintains the same value as the feedback value of the speed $\omega$ by the operation of the change-over circuit 30. Upon the recovery of the controlling function at the time b, the change-over circuit 30 is switched to the side of the speed determining means 20, and accordingly, the speed reference $\omega^*$ gradually increases on the basis of the set reference of the speed determining means 20 with the rising state determined by the characteristics of the rate limiting circuit 31 and finally reaches the set value of the speed determining means 20. Namely, the speed reference $\omega^*$ does not change in a stepped manner from the time b, but changes gradually, thus eliminating the necessity for the excessive current reference $I_a^*$ to follow the feedback value of the speed $\omega$, and moreover, since the armature current reference $I_a^*$ is limited in response to the value of the field flux $\Phi$, there is no fear of commutation failure.

As described above, according to this embodiment, inconvenience due to the decreasing in the magnetic flux is eliminated and the time loss from the starting of the control to the occurrence of the current reference $I_a^*$ can be substantially eliminated, whereby the speed can quickly rise without failure of the commutation to perform safe and effective motor operation.

The operation control circuit unit in this first embodiment may be also realized by a software of a computer.

FIG. 8 is a circuit diagram representing the second embodiment in a case where this invention is applied to the magnetic flux control means, which comprises the circuit construction shown in FIG. 1 as a basic construction and further comprises, in association with the basic construction, a first-order lag filter 40, a change-over circuit 41, and an AND gate circuit 33.

The first-order lag filter 40 has a time constant corresponding to the time constant of the electric motor and is incorporated in a flux reference input stage of the magnetic flux control circuit 26. The change-over circuit 41 performs the change-over operation to transmit, as the flux reference into the magnetic flux control circuit 26 through the first-order lag filter 40, the flux reference from the flux setter 25 during the normal operation of the field control means and the feedback value of the field flux $\Phi$ from the operating element 24 during the stoppage of the field control means. The change-over circuit 41 performs the change-over operation in response to the output signal transmitted from the AND gate circuit 33 in such a manner as described with reference to FIG. 6.

The operation of the circuit arrangement representing the control system shown in FIG. 8 will be described hereunder with reference to FIG. 9, which represents a time chart wherein the instantaneous power supply stoppage occurs at the itme a and the supply is recovered at the time b. The feedback value of the field flux $\Phi$ gradually decreases from the time a, but the flux control means does not attain the control function during the power supply stoppage, so that the reference flux $\Phi^*$ is maintained so as to have the same value as the feedback value of the field flux $\Phi$ in accordance with the operation of the change-over circuit 41.

When the control function of the flux control means is recovered at the time b, the change-over circuit 41 is switched to the side of the magnetic flux setter 25, whereby the flux reference $\Phi^*$ gradually increases with the rising to be determined by the characteristics of the first-order lag filter 40 on the basis of the set reference of the magnetic flux setter 25, and finally reaches the set point of the flux setter 25. Namely, the flux reference $\Phi^*$ does not change in a stepped mode from the time b at which the flux control starts, but changes gradually, so that there is no necessity of the excessive flux

reference $\Phi^*$ and no fear of the overshoot.

As described above, according to this embodiment, an inconvenience caused by the fact that the flux reference $\Phi^*$ cannot be quickly decreased and the time loss for the occurrence of the flux reference $\Phi^*$ from the starting of the flux control can be substantially eliminated, whereby the voltage can rise for a short time without generating an excessive voltage, thus performing the safe and effective motor operation.

In a preferred modification, one rectifier 34 may be utilized as shown in FIG. 10 instead of the arrangement of the frequency converter 15, the a.c. exciter 16 and the rotary rectifier 17 used in the control systems shown in FIGS. 6 and 8. This modification can of course attain substantially the same functions and effects as attained by the control systems shown in FIGS. 6 and 8.

The operation control circuit unit in this second embodiment may be also realized by a software of a computer.

## Claims

1. A control system for a synchronous motor (13) comprising :

speed setting means (20) for setting a speed reference of the motor (13);

speed detecting means (19) for detecting a driving speed of the motor (13);

speed control means (21) for controlling the speed of the motor (13) so as to reduce the deviation between the speed reference from the speed setting means (20) and a feedback value of the driving speed from the speed detecting means (19);

field flux setting means (25) for setting a field flux reference for the motor (13);

field flux detecting means (18, 24) for detecting a field flux of the motor (13);

change-over means (41) adapted to perform change-over operation for transmitting a set point set by the field flux setting means (25) during a normal operation and a feedback value of the field flux of the motor (13) during a power supply stoppage to the motor (13);

field flux control means (26, 28) for controlling the field flux of the motor (13) so as to reduce the deviation between an output of the change-over means (41) and a feedback value of the field flux from the field flux detecting means (24); and

a first-order lag filter (40) arranged between an output side of the change-over means (41) and an input side of the field flux control means (26, 28).

**2.** The control system according to claim 1 characterized in

that said first-order lag filter (40) is having a time constant corresponding to a time constant of the synchronous motor (13).

**3.** The control system according to claim 1 characterized by

operating means (24) for dividing a voltage of the synchronous motor (13) by a speed thereof to obtain the field flux of the synchronous motor (13).

**4.** The control system according to claim 1 characterized by an

AND gate means (33) operatively connected to the change-over means (41), the change-over means (41) being driven by an output signal from the AND gate means (33) in response to external operation instructions at a time of no power supply stoppage.

**5.** A control system for a synchronous motor (13) comprising :

speed setting means (20) for setting a speed reference of the motor (13);

speed detecting means (19) for detecting a driving speed of the motor (13);

armature current control means (23) for controlling an armature current of the motor (13);

first change-over means (30) adapted to perform change-over operation for transmitting, as the speed reference, a set point set by the speed setting means (20) during a normal operation or a feedback value of the driving speed from the speed detecting means (19) during a power supply stoppage to the motor (13);

rate limiting means (31) arranged at the output of the first change-over means (30), the rate limiting means (31) having the function of providing the speed reference with a predetermined rate-of-change characteristics;

speed control means (21) for controlling the speed of the motor (13) so as to reduce the deviation between an output of the rate limiting means (31) and a feedback value of the driving speed from the speed detecting means (19), the speed control means (21) being arranged between the rate limiting means (31) and the current control means (23);

field flux setting means (25) for setting a field flux reference for the motor (13);

field flux detecting means (24) for detecting a field flux of the motor (13);

second change-over means (41) adapted to perform change-over operation for transmitting a set point set by the field flux setting means (25) during the normal operation or a feedback value of the field flux of the motor (13) during the power supply stoppage;

field flux control means (26) for controlling the field flux of the motor (13) so as to reduce the deviation between an output of the second change-over means (41) and a feedback value of the field flux from the field flux detecting means (24); and

a first-order lag filter (40) arranged between an output side of the second change-over means (41) and an input side of the field flux control means (26).

**6.** The control system according to claim 5 characterized in

that said first-order lag filter (40) is having a time constant corresponding to a time constant of the synchronous motor (13).

**Patentansprüche**

**1.** Steuersystem für einen Synchronmotor (13), mit

einer Geschwindigkeits-Einstellvorrichtung (20) zum Einstellen einer Bezugsgeschwindigkeit des Motors (13),

einer Geschwindigkeits-Erfassungsvorrichtung (19) zum Erfassen einer Fahrgeschwindigkeit des Motors (13),

einer Geschwindigkeits-Steuervorrichtung (21) zum Steuern der Geschwindigkeit des Motors (13), um die Abweichung zwischen der Bezugsgeschwindigkeit von der Geschwindigkeits-Einstellvorrichtung (20) und einem Rückführwert der Fahrgeschwindigkeit von der Geschwindigkeits-Erfassungsvorrichtung (19) zu vermindern,

ein Feldfluß-Einstellvorrichtung (25) zum Einstellen eines Feldfluß-Bezugswertes für den Motor (13),

einer Feldfluß-Erfassungsvorrichtung (18, 24) zum Erfassen eines Feldflusses des Motors (13),

einer Umschaltvorrichtung (41), die eine Umschaltoperation durchführen kann, um während eines Normalbetriebes einen von der Feldfluß-Einstellvorrichtung (25) eingestellten Einstellpunkt und während einer Unterbrechung der Energieversorgung zum Motor (13) einen Rückführwert des Feldflusses des Motors (13) zu übertragen,

einer Feldfluß-Steuervorrichtung (26, 28) zum Steuern des Feldflusses des Motors (13), um die Abweichung zwischen einem Ausgangssignal der Umschaltvorrichtung (21) und einem Rückführwert des Feldflusses von der Feldfluß-Erfassungsvorrichtung (24) zu minimieren, und mit einem Verzögerungsfilter erster Ordnung (40), das zwischen einer Ausgangsseite der Umschaltvorrichtung (41) und einer Eingangsseite der Feldfluß-Steuervorrichtung (26, 28) angeordnet ist.

2. Steuersystem nach Anspruch 1, dadurch gekennzeichnet, daß das Verzögerungsfilter erster Ordnung (40) eine Zeitkonstante aufweist, die einer Zeitkonstante des Synchronmotors (13) entspricht.

3. Steuersystem nach Anspruch 1, gekennzeichnet durch eine Betriebsvorrichtung (24) zum Teilen einer Spannung des Synchronmotors (13) durch eine Geschwindigkeit desselben, um den Feldfluß des Synchronmotors (13) zu erhalten.

4. Steuersystem nach Anspruch 1, gekennzeichnet durch eine UND-Gattervorrichtung (33), die funktionsmäßig mit der Umschaltvorrichtung (41) verbunden ist, wobei die Umschaltvorrichtung (41) von einem Ausgangssignal von der UND-Gattervorrichtung (33) abhängig von externen Betriebsbefehlen während der Zeit angetrieben wird, während derer keine Unterbrechung der Energieversorgung vorliegt.

5. Steuersystem für einen Synchronmotor (13), mit
einer Geschwindigkeits-Einstellvorrichtung (20) zum Einstellen einer Bezugsgeschwindigkeit des Motors (13),
einer Geschwindigkeits-Erfassungsvorrichtung (19) zum Erfassen einer Fahrgeschwindigkeit des Motors (13),
einer Ankerstrom-Steuervorrichtung (23) zum Steuern eines Ankerstroms des Motors (13),
einer ersten Umschaltvorrichtung (30), die eine Umschaltfunktion durchführen kann, um als die Bezugsgeschwindigkeit während eines Normalbetriebs einen von der Geschwindigkeits-Einstellvorrichtung (20) eingestellten Einstellpunkt oder während einer Unterbrechung der Leistungsversorgung zum Motor (13) einen Rückführwert der Fahrgeschwindigkeit von der Geschwindigkeits-Erfassungsvorrichtung (19) zu übertragen,
einer Ratenbegrenzungsvorrichtung (31), die am Ausgang der ersten Umschaltvorrichtung (30) angeordnet ist, wobei die Ratenbegrenzungsvorrichtung (31) die Funktion hat, für die Bezugsgeschwindigkeit eine vorgegebene Änderungsraten-Kennlinie vorzusehen,
eine Geschwindigkeits-Steuervorrichtung (21) zum Steuern der Geschwindigkeit des Motors (13), um die Abweichung zwischen einem Ausgangssignal der Ratenbegrenzungsvorrichtung (31) und einem Rückführwert der Fahrgeschwindigkeit von der Geschwindigkeits-Erfassungsvorrichtung (19) zu vermindern, wobei die Geschwindigkeits-Steuervorrichtung (21) zwischen der Ratenbegrenzungsvorrichtung (31) und der Strom-Steuervorrichtung (23) angeordnet ist, einer Feldfluß-Einstellvorrichtung (25) zum Einstellen eines Feldfluß-Bezugswertes für den Motor (13), einer Feldfluß-Erfassungsvorrichtung (24) zum Erfassen eines Feldflusses des Motors (13),
einer zweiten Umschaltvorrichtung (41), die eine Umschaltfunktion ausführen kann, um während des Normalbetriebs einen von der Feldfluß-Einstellvorrichtung (25) eingestellten Einstellwert oder während einer Unterbrechung der Leistungsversorgung einen Rückführwert des Feldflusses des Motors (13) zu übertragen,
einer Feldfluß-Steuervorrichtung (26) zum Steuern des Feldflusses des Motors (13), um die Abweichung zwischen einem Ausgangssignal der zweiten Umschaltvorrichtung (41) und einem Rückführwert des Feldflusses von der Feldfluß-Erfassungsvorrichtung (24) zu steuern, und
einem Verzögerungsfilter erster Ordnung (40), das zwischen einer Ausgangsseite der zweiten Umschaltvorrichtung (41) und einer Eingangsseite der Feldfluß-Steuervorrichtung (26) angeordnet ist.

6. Steuersystem nach Anspruch 5, dadurch gekennzeichnet, daß das Verzögerungsfilter erster Ordnung (40) eine Zeitkonstante hat, die einer Zeitkonstante des Synchronmotors (13) entspricht.

**Revendications**

1. Système de régulation d'un moteur synchrone (13), comprenant :
des moyens de réglage de vitesse (20) pour fixer une vitesse de référence du moteur (13) ;
des moyens de détection de vitesse (19) pour détecter la vitesse d'entraînement du moteur (13) ;
des moyens de régulation de vitesse (21) pour réguler la vitesse du moteur (13) de façon à réduire l'écart entre la référence de vitesse en provenance des moyens de réglage de vitesse (20) et une valeur de réaction de vitesse d'entraînement en provenance des moyens de détection de vitesse (19) ;
des moyens de réglage de flux inductif (25) pour fixer une référence de flux inductif pour le moteur (13) ;

des moyens de détection de flux inductif (18, 24) pour détecter le flux inductif du moteur (13) ;

des moyens de commutation (41) propres à réaliser une opération de commutation pour transmettre un point de réglage fixé par les moyens de réglage de flux inductif (25) pendant un fonctionnement normal et une valeur de réaction du flux inductif du moteur (13) pendant une interruption d'alimentation du moteur (13) ;

des moyens de régulation de flux inductif (26, 28) pour réguler le flux inductif du moteur (13) de façon à réduire l'écart entre la sortie des moyens de commutation (41) et une valeur de réaction du flux inductif en provenance des moyens de détection de flux inductif (24) ; et

un filtre à retard du premier ordre (41) disposé entre une sortie des moyens de commutation (41) et une entrée des moyens de régulation de flux inductif (26, 28).

2. Système de régulation selon la revendication 1, caractérisé en ce que le filtre à retard du premier ordre (40) a une constante de temps qui correspond à une constante de temps du moteur synchrone (13).

3. Système de régulation selon la revendication 1, caractérisé par des moyens d'actionnement (24) pour diviser une tension du moteur synchrone (13) par sa vitesse pour obtenir le flux inductif du moteur synchrone (13).

4. Système de régulation selon la revendication 1, caractérisé par un moyen de porte ET (33) connecté en fonctionnement aux moyens de commutation (41), les moyens de commutation (41) étant pilotés par un signal de sortie du moyen de porte (33) en réponse à des instructions de fonctionnement externe à un instant autre qu'une interruption d'alimentation.

5. Système de régulation d'un moteur synchrone (13) comprenant :

des moyens de réglage de vitesse (20) pour fixer une référence de vitesse du moteur (13) ;

des moyens de détection de vitesse (19) pour détecter une vitesse d'entraînement du moteur (13) ;

des moyens de régulation (23) du courant d'induit pour contrôler le courant d'induit du moteur (13) ;

des premiers moyens de commutation (30) adaptés à réaliser une opération de commutation pour transmettre, en tant que référence de vitesse, un point de réglage fixé par les moyens de réglage de vitesse (20) pendant un fonctionnement normal ou une valeur de réaction de la vitesse d'entraînement en provenance des moyens de détection de vitesse (19) pendant une interruption d'alimentation du moteur (13) ;

des moyens de limitation de pente (31) disposés à la sortie des premiers moyens de commitation (30), les moyens de limitation de pente (31) ayant pour fonction de fournir la référence de vitesse avec une caractéristique prédéterminée de pente de variation ;

des moyens de régulation de vitesse (21) pour réguler la vitesse du moteur (13) de façon à réduire l'écart entre la sortie des moyens de limitation de vitesse (31) et une valeur de réaction de la vitesse d'entraînement en provenance des moyens de détection de vitesse (19), les moyens de régulation de vitesse (21) étant disposés entre les moyens de limitation de pente (31) et les moyens de régulation de courant (23) ;

des moyens de réglage de flux inductif (25) pour fixer un flux inductif de référence pour le moteur (13) ;

des moyens de détection de flux inductif (24) pour détecter le flux inductif du moteur (13) ;

des seconds moyens de commutation (41) adaptés à réaliser une opération de commutation pour transmettre un ensemble de points de réglage fixés par les moyens de réglage de flux inductif (25) pendant le fonctionnement normal ou une valeur de réaction du flux inductif du moteur (13) pendant une interruption d'alimentation ;

des moyens de régulation de flux inductif (26) pour réguler le flux inductif du moteur (13) de façon à réduire l'écart entre la sortie des seconds moyens de commutation (41) et une valeur de réaction du flux inductif en provenance des moyens de détection de flux inductif (24); et

un filtre à retard du premier ordre (40) disposé entre une sortie des seconds moyens de commutation (41) et une entrée des moyens de régulation de flux inductif (26) ;

6. Système de régulation selon la revendication 5, caractérisé en ce que le filtre à retard du premier ordre (40) a une constante de temps qui correspond à une constante de temps du moteur synchrone (13).

**F I G. I   PRIOR ART**

FIG. 2 PRIOR ART

FIG. 3 PRIOR ART

FIG.4 PRIOR ART

FIG.5 PRIOR ART

RATE
LIMITING
CIRCUIT

OPERATION
INSTRUCTIONS

POWER SUPPLY
STOPPAGE SIGNAL

FIG. 6

FIG. 7

FIG. 9

FIG. 8

OPERATION INSTRUCTIONS
POWER SUPPLY STOPPAGE SIGNAL

FIG. 10